# FASCICULE DE BREVET EUROPEEN

(11) **EP 2 369 297 B1**
(45) Date de publication et mention de la délivrance du brevet: **25.09.2013**
(21) Numéro de dépôt: 11158531.1
(22) Date de dépôt: 16.03.2011
(51) Int. Cl.: G01C 21/00, G01C 23/00

(54) **Dispositif d'aide au vol pour un aéronef**
Vorrichtung zur Flughilfe für Luftfahrzeug
Flight assistance device for aircraft

(30) Priorité: 23.03.2010 FR 1001150
(43) Date de publication de la demande: 28.09.2011
(73) Titulaire: Thales, 92200 Neuilly Sur Seine (FR)
(72) Inventeur: Landragin, Thomas, 33187, LE HAILLAN Cedex (FR); Nouvel, Christian, 33187, LE HAILLAN Cedex (FR)
(74) Mandataire: Esselin, Sophie

(56) Documents cités:
- EP-A2- 2 072 956
- EP-A2- 2 221 583
- US-B1- 7 072 746

## Description

L'invention concerne les dispositifs d'aide au vol pour un aéronef, en particulier pour les missions de sauvetage.

Lors des missions de la sécurité civile de type sauvetage comme la récupération humaine sur une route après un accident, les hélicoptères interviennent dans un endroit isolé sans repère précis de localisation du lieu de l'intervention, par exemple une personne accidentée dans un champ où les seuls repères donnés sont les noms des villages aux alentours. La problématique pour le pilote dans ce genre de missions est de pouvoir se repérer facilement en permanence par rapport à des caractéristiques environnantes puisqu'il n'a pas la position précise du lieu de l'intervention. Et cela, que ce soit pendant le vol, où le pilote cherche à se situer en permanence par rapport aux alentours, par exemple savoir quel est le village qu'il repère au loin (sachant que tous les petits villages de la région peuvent se ressembler) ou à la fin du vol en s'approchant de la destination finale, où le pilote cherche des éléments caractéristiques lui permettant de mieux se situer par rapport au lieu de l'accident.

La problématique est rendue complexe lors de ces missions par le fait que toutes ces actions de repérage doivent être effectuées tout en assurant la sécurité du vol et le respect de la réglementation de vol, notamment l'altitude minimale autorisée de survol d'un village. Or, ce repérage est rendu difficile par le fait que l'on est dans un endroit isolé, accentué par le fait que les personnes au sol peuvent avoir peu d'éléments visuels pour indiquer à l'hélicoptère où ils sont. Cette difficulté de repérage est d'autant plus nette quand l'intervention se déroule dans des conditions météorologiques défavorables, car le repérage visuel est une étape obligée dans ce type de mission.

Aujourd'hui, les hélicoptères utilisés pour ces missions sont des hélicoptères équipés de dispositifs d'assistance au vol sophistiqués. Cependant, leurs équipements ne permettent pas de résoudre les problèmes précités pour un tel type de missions. En effet, le contenu et la précision de leur base de données, leurs zooms d'affichage des informations, leurs points de passage système, sont optimisés pour des missions de type longue distance avec des règles de vol aux instruments. Cependant, il n'existe pas de bases de données précises du lieu recherché quand il s'agit de missions locales, et les pilotes ne disposent pas des informations utiles pour aller au bon endroit, pour l'identifier sûrement et se poser correctement. De ce fait, quand ils repèrent un petit village, ils ont du mal à savoir s'il s'agit du village de destination ou du village voisin. Pour s'aider à se repérer, les pilotes utilisent souvent des cartes papier IGN de la région (pour Institut Géographique National) initialement prévues pour l'utilisation en voiture et/ou en randonnées pédestres. Ils repèrent les routes secondaires (départementales par exemple), les voies ferrées, les fleuves et d'autres éléments caractéristiques proches des villages recherchés (cimetières, châteaux d'eaux par exemple).

D'autre part, l'utilisation d'un dispositif de navigation par satellite (GPS pour « Global Positioning System » en langage anglo-saxon) ne résoudrait qu'en partie le problème, car dans les zones isolées, situées entre deux villages par exemple, le dispositif GPS ne permet pas de se repérer aisément.

Ces difficultés nécessitent plusieurs sources d'informations pour être sûr, ce qui prend du temps, du carburant nécessaire dans des conditions de visibilité «aux limites autorisées». Cette recherche est d'autant plus longue que le pilote doit en parallèle continuer à piloter manuellement, à surveiller le carburant, la météorologie locale, les obstacles potentiellement dangereux et le tout en basse altitude. Or, l'autonomie de l'hélicoptère pour ce type de mission est souvent réduite, et la réussite de la mission dépend ainsi de la rapidité du pilote à se rendre sur le lieu de l'intervention. Ces difficultés impliquent parfois des annulations de mission, tant le pilote éprouve des difficultés pour se repérer, pour se poser et pour rentrer à la base avec des réserves limitées de carburant.

D'autres problématiques spécifiques à l'aéronautique rentrent en jeu pour lequel le dispositif GPS n'offre pas de solution efficace et peut même être un élément perturbateur par rapport à la gestion de ces problématiques en attirant trop l'attention du pilote. La gestion du carburant est primordiale pour savoir si le niveau de carburant est suffisant pour aller au lieu d'intervention et pour revenir à la base de départ. La réglementation exige de conserver une réserve de 20 minutes de vol par exemple. De plus pour ces missions, le carburant donné est souvent limité et le pilote dispose de peu de marges de manoeuvre dans sa mission.

La gestion de la météorologie est difficile à assurer en même temps que les tâches de pilotage et de repérage. L'équipage doit respecter une vitesse maximale qui est fonction de la distance de visibilité. Plus la visibilité est mauvaise, plus la vitesse de translation est faible et conséquence directe plus la dérive due au vent est grande. En phase de poser dans un champ, l'orientation du vent par rapport à l'hélicoptère est très importante.

La gestion des obstacles est spécifique des hélicoptères qui volent en basse altitude et donc très exposés aux lignes électriques et aux obstacles isolés par exemple. On doit d'ailleurs tenir compte des obstacles devant soi comme derrière soi (la marche arrière étant une autre spécificité de l'hélicoptère). Cette gestion est très importante en phase de reconnaissance basse altitude juste avant le poser dans un champ avec une contrainte temporelle forte lorsqu'un blessé grave est en attente.

La gestion de la réglementation est également une problématique à prendre en compte, notamment l'altitude réglementaire à respecter en cas de survol d'une commune. Cette altitude de survol dépend de la superficie de la commune en question.

Le document EP2072956 décrit un dispositif d'aide au vol pour un aéronef comportant des moyens de lectures des données de navigation de l'aéronef et des moyens d'affichage aptes à représenter la position et le cap courant de l'aéronef par un référentiel immobile dans la partie centrale de la zone d'affichage, le dispositif comportant une base de données contenant des informations topologiques représentatives des localités d'une zone géographique de façon à afficher en périphérie de la partie centrale de la zone d'affichage au moins une étiquette contenant des informations représentatives d'une première localité et des informations de gestion du vol pour atteindre cette localité, ainsi qu'une représentation topologique d'une deuxième localité.

Le document US7072746 décrit quant à lui l'affichage d'une étiquette contenant des informations sur un point de passage sélectionné par le pilote et l'affichage d'informations topologiques de la zone survolée. L'étiquette est affichée à proximité du point sélectionné par le pilote à l'aide d'un curseur.

Un objectif de la présente invention consiste à assister l'équipage dans la réalisation de missions d'intervention, notamment pour faciliter le repérage de la zone d'atterrissage et pour garantir la sécurité du vol.

Plus précisément, l'invention, comme définie dans la revendication 1, concerne un dispositif d'aide au vol pour un aéronef comportant des moyens de lectures des données de navigation de l'aéronef et des moyens d'affichage aptes à représenter la position et le cap courant de l'aéronef par un référentiel immobile dans la partie centrale de la zone d'affichage. Il comporte également une base de données contenant des informations topologiques et photographiques représentatives des localités d'une zone géographique de façon à afficher en périphérie de la partie centrale de la zone d'affichage au moins une étiquette contenant des informations représentatives d'une localité et des informations de gestion du vol pour atteindre la localité, au moins une représentation photographique et au moins une représentation topologique de la localité de destination et en ce que ladite étiquette est positionnées dans la zone périphérique relativement au référentiel immobile de telle manière que la position de l'étiquette par rapport au référentiel immobile représente la position de la localité relativement à la position courante de l'aéronef.

Préférentiellement, la zone périphérique est divisée en au moins deux secteurs dans lesquels est positionnée une étiquette d'information, la dite étiquette étant immobile dans le secteur.

Préférentiellement, une étiquette représentative de la localité de destination est affichée dans la partie supérieure de la zone d'affichage.

Préférentiellement, une étiquette représentative de la localité de départ est affichée dans la partie inférieure de la zone d'affichage.

Selon une variante de l'invention, une représentation synthétique de l'environnement extérieur de l'aéronef en vue relative par rapport à la position et le cap courant de l'aéronef est affichée dans la partie centrale de la zone d'affichage superposé au référentiel immobile.

Selon une variante de l'invention, le référentiel immobile est un indicateur de cap.

Selon une variante de l'invention, une étiquette d'information comprend les informations suivantes :
- Le nom et l'indicateur de zone géographique de la localité;
- La route à suivre pour rejoindre la localité;
- La distance et la durée nécessaire pour rejoindre la localité selon la vitesse courante de l'aéronef;
- Un indicateur de carburant indiquant si le carburant à bord est suffisant pour aller jusqu'à la localité et pour aller jusqu'à la localité et revenir à la base de départ;
- Les Informations météorologiques : provenance et vitesse du vent;
- La distance de visibilité et la vitesse maximale autorisée par la réglementation.

Selon une variante de l'invention, la représentation photographique d'une localité est positionnée à proximité de l'étiquette représentant la localité.

Selon une variante de l'invention, la représentation photographique est une représentation de la localité vue selon la route d'approche de l'aéronef.

Selon une variante de l'invention, la représentation topologique d'une localité est positionnée à proximité de l'étiquette représentant la localité et comprend des repères topologiques de la localité positionnés les uns par rapport aux autres en fonction de la route d'approche de l'aéronef.

Selon une variante de l'invention, la base de données comporte les repères topologiques suivants : voie de circulation routière, voie ferrée, voie fluviale, cimetière, superficie de la localité.

L'invention présente l'avantage de fournir de manière synthétique les informations essentielles pour réaliser la mission de sauvetage. Le dispositif d'aide au vol permet au pilote de se repérer facilement par rapport aux localités environnantes et d'atteindre ainsi efficacement en termes de carburant et de temps la zone d'intervention. Les étiquettes disposées relativement à la position courante de l'aéronef aident au repérage et les informations contenues dans ces étiquettes fournissent les informations essentielles liées à la navigation, la réglementation et la météorologie. Ainsi, le pilote n'a plus besoin d'avoir recours à différentes sources d'information comme le dispositif GPS et les cartes IGN pour réaliser la tâche de repérage.

De plus, les représentations photographiques et synthétiques de la localité de destination permettent au pilote de se repérer de façon plus précise lors de l'approche de la zone d'intervention grâce aux repères topologiques disposés relativement entre eux selon la route d'approche de l'aéronef facilement identifiables. Ces éléments topologiques permettent de réduire le temps d'arrivée sur la zone d'intervention car ceux-ci sont facilement identifiables lors d'un vol à vue.

L'invention sera mieux comprise et d'autres avantages apparaîtront à la lecture de la description qui va suivre donnée à titre non limitatif et grâce aux figures annexées parmi lesquelles :
La figure 1 représente un exemple d'affichage présenté par le dispositif d'aide au vol selon l'invention. Le dispositif de visualisation présente une vue synthétique de l'environnement extérieur et les informations d'aide au vol en périphérie de ladite vue synthétique.
La figure 2 décrit plus spécifiquement les informations présentées dans une étiquette d'information selon l'invention.
La figure 3 représente une photographie en noir et blanc de la destination pouvant être présentée au pilote.
La figure 4 représente une représentation synthétique de la destination pouvant être affichée au pilote pour aider au repérage de la zone d'intervention.

L'invention consiste à proposer une fonction d'aide au vol d'un aéronef mise en oeuvre par un calculateur embarqué et apte à traiter des données de navigation, d'information liées à la réglementation de vol et d'informations liées à des localités situées dans une zone géographique donnée. Les données issues du traitement des informations sont présentées à l'équipage au moyen d'un dispositif d'affichage en interaction avec le dit équipage. Un dispositif d'affichage peut être un écran MFD (« Multi Fonction Display »). Tout type de dispositif d'affichage connu de l'état de la technique peut être envisagé pour la présentation des informations et le dispositif d'affichage utilisé ne présente pas de caractère limitatif à la portée de l'invention. On peut également envisager l'implémentation de l'invention avec un affichage tête haute par projection.

L'objectif de cette fonction est de présenter des informations de manière à faire une navigation à vue, en aidant le pilote à reconnaître les éléments pertinents de la scène d'intervention pour qu'il puisse se repérer en relatif par rapport à ces éléments, et ce tout en assurant la sécurité du vol en lui présentant de façon intuitive les informations nécessaires sur le carburant, la météorologie, les obstacles et l'altitude de survol.

Un moyen nécessaire à l'implémentation de cette fonction est notamment la mise à disposition d'une base de données contenant les éléments d'information suivants : la liste des communes françaises : nom, département, latitude, longitude, superficie, altitude de la commune (souvent prise au niveau de la mairie), altitude de survol ; les informations terrain (altitude, obstacles) ; pour chaque commune : une ou plusieurs photos de la commune, prise en altitude, où il est possible d'identifier facilement des repères visuels (routes, fleuves, voies ferrées, cimetières) ; des informations sur la position des éléments caractéristiques de la commune ( à titre d'exemple non limitatif les routes, les fleuves, les voies ferrées, les cimetières).

Cette base de données diffère des bases de données habituelles par les deux aspects suivants : d'une part elle contient des éléments de repérage plus précis sur les villages locaux, et d'autre part le besoin en précision de positionnement sur le terrain n'est pas critique. En effet, une précision d'une dizaine de mètres suffit amplement. C'est la pertinence des informations qui est recherchée ainsi que la position relative d'un élément par rapport à un autre. De même, les photos présentes n'ont pas besoin d'être en couleurs, une photo noir et blanc suffit amplement à repérer les éléments caractéristiques. En effet, une photographie en noir et blanc présente l'avantage de réduire la taille mémoire occupée par les photographies en comparaison de base de données photographie en couleur et d'autre part, elle est plus proche de la réalité observée par le pilote en cas de mauvaise météorologie et elle permet de mieux repérer les éléments caractéristiques. De plus en vue de réduire la capacité de mémoire dédiée aux photographies, il n'est pas nécessaire de mémoriser les photographies de toutes les communes du territoire car un appareil intervient uniquement dans une zone géographique donnée. La base de données peut se limiter aux localités de la zone d'intervention d'un appareil.

Les données de navigation de l'aéronef comme la position courante, le cap courant, le niveau de carburant et les estimations de temps restant de vol au regard du carburant restant et de la configuration de l'appareil (masse, nombre de passager par exemple) peuvent être lues au moyen des équipements d'interfaces entre les systèmes avioniques et les moyens de calcul mettant en oeuvre les fonctions du dispositif d'aide au vol. Le système de gestion de navigation de l'aéronef est le calculateur qui permet généralement de lire ces données en temps réel durant le vol.

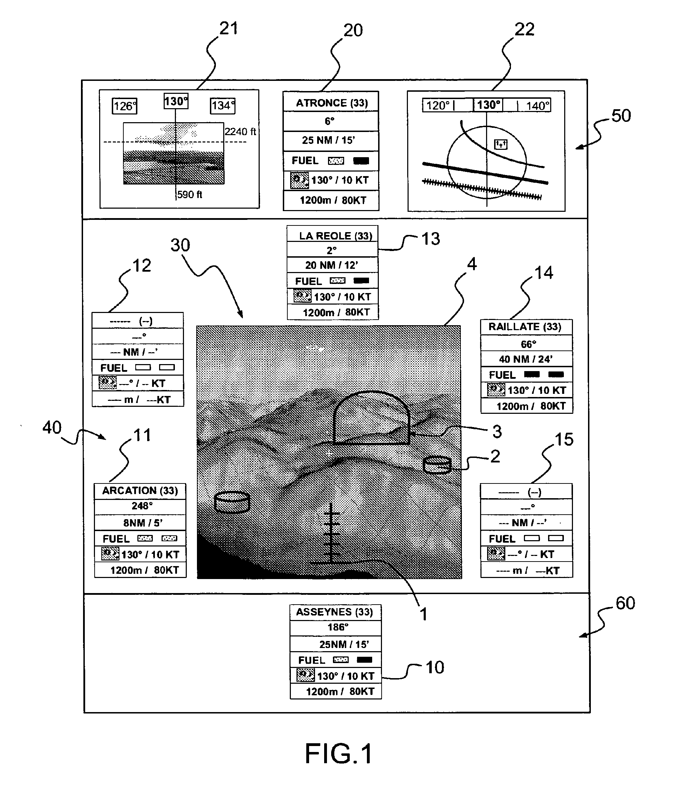

La figure 1 représente un premier mode d'affichage de l'invention sur une interface du cockpit. La fonction est affichée sur un unique écran de type MFD. Un référentiel immobile 1 est positionné sur la partie centrale 30 de la zone d'affichage. Ce référentiel est une barre sensiblement verticale de manière à indiquer le cap courant de l'aéronef. Ce référentiel indique également la position courante de l'aéronef. Dans cette partie centrale 30 de la zone d'affichage est représentée une vue synthétique 4 de l'environnement proche de l'aéronef. Il s'agit d'une vue en relatif selon le poste de pilotage de l'aéronef. L'implémentation d'un système de vision synthétique est connue de l'état de la technique et ne représente pas une limitation de l'invention. Les systèmes de vision synthétique sont utilisés pour assister le pilote lorsqu'il navigue en condition de faible visibilité. Selon un autre mode d'affichage le référentiel immobile est représenté seul dans la partie centrale 30 de la zone d'affichage. La vue synthétique 4 représente le terrain en 3D sur lequel on indique à la fois les obstacles 2 et les altitudes de survol 3.

Cette représentation 3D n'est pas une représentation précise de la réalité. Il s'agit d'une aide à la navigation et non d'un moyen de pilotage. L'affichage d'une vision synthétique présente l'avantage au pilote de mieux appréhender le relief environnant et de repérer de façon intuitive les éléments spécifiques au pilotage hélicoptère (obstacles et les altitudes de survol). La réglementation de vol impose de survoler un village au-dessus d'une altitude de survol minimale. Cette zone réglementée de vol est représentée par exemple par un dôme 3 autour d'un village. Ces informations peuvent être obtenues à partir de la base de données des informations des localités.

Durant le vol, la tâche de repérage autour des localités environnantes est facilitée par l'affichage d'étiquettes d'information 11 à 15 représentant les localités dans la zone géographique. Dans ce mode d'affichage cinq étiquettes 11, 12, 13, 14 et 15 sont positionnées circulairement dans la zone périphérique 40 entourant le référentiel immobile 1 et par conséquent entourant la partie centrale 30. La zone périphérique 40 est divisée en plusieurs secteurs, cinq secteurs dans le cas de la figure 1. Une étiquette est positionnée dans un secteur et est avantageusement immobile à l'intérieur de ce secteur afin d'éviter les déplacements permanents de ces étiquettes. La figure 1 est un exemple non limitatif et le nombre de secteurs pouvant être affichés peut être inférieur ou supérieur à cinq et être configuré par l'équipage. Un secteur délimite une plage de valeur de route et les localités positionnées dans cette plage de valeur de route de vol par rapport au cap de l'aéronef sont positionnées dans une étiquette positionnée dans le dit secteur. La taille de la plage de valeur de route dépend du nombre de secteurs constituant la zone périphérique 40.

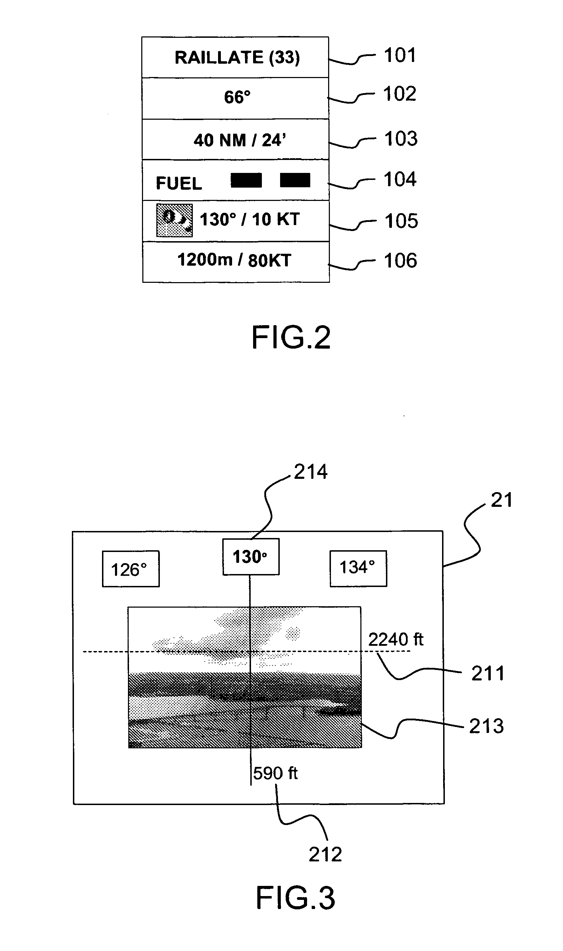

La figure 2 représente une étiquette d'informations d'une localité comprenant les indications nécessaires suivantes pour l'aide au repérage, issues à la fois de la base de données d'informations relatives aux localités, et de calculs issus d'informations de cette base de données et des informations de navigation courante du porteur telle que la position et la vitesse de vol:
Un champ d'information 101 indiquant le nom et le département de la localité;
Un champ d'information 102 indiquant la route à suivre pour rejoindre la localité;
Un champ d'information 103 indiquant la distance et la durée de vol nécessaires pour rejoindre la localité en fonction de la vitesse courante;
Un champ d'information 104 représentant un indicateur de carburant de façon à connaître si le niveau de carburant courant est suffisant pour aller jusqu'à cette localité et pour revenir à la base de départ. L'indicateur de carburant est représenté par deux signalisations de couleurs mais d'autres modes de représentation sont possibles, par exemple un affichage de l'étiquette en couleurs ou en pointillés en fonction de la suffisance ou non du carburant ou représentation du carburant sous forme standard de jauge en indiquant les 2 éléments critiques, tout en indiquant la réserve exigée par la réglementation.
Un champ d'information 105 indiquant les Informations météorologiques standard par exemple la provenance et la vitesse du vent;
Un champ d'information 106 indiquant la vitesse maximale autorisée par la réglementation, cette vitesse dépendant de la distance de visibilité lors du vol à vue.

Ces informations sont les indications essentielles au repérage durant le vol et à l'identification des localités présentes dans son champ de vision. Le pilote peut ensuite confirmer les informations affichées dans son dispositif d'aide au vol en regardant à l'extérieur la présence ou non de la localité renseignée.

Avantageusement, pour éviter la surcharge d'informations, une fonction de filtrage des étiquettes 11 à 15 est mise en oeuvre. Selon un filtrage de base pour chaque secteur, on n'affiche qu'une seule étiquette, donc on sélectionne la commune la plus proche du porteur dans ce secteur. Selon un second filtrage dit filtrage temporel, seules les villes situées à moins de cinq minutes de vol calculées en fonction de la vitesse courante sont affichées. Selon un troisième filtrage dit filtrage spatial, seules les villes situées à moins de 5 NM du porteur sont affichées. Dans les deux derniers modes de filtrage, une ou plusieurs étiquettes peuvent être représentées dans un même secteur. Le nombre d'étiquettes dépend de la surface d'affichage exploitée. La fonction de filtrage peut être initialisée par défaut et/ou par le pilote avec l'interface appropriée. Si le filtrage est effectif, il est quand même utile de laisser l'étiquette affichée avec des champs vides ou remplis de tirets en fonction de la disponibilité des informations numériques.

Grâce à l'affichage en secteurs, lors de la mise à jour des étiquettes on évite de changer le contenu d'une étiquette tout le temps. La route indiquée à l'intérieur de l'étiquette varie (précis au degré près), mais pas l'étiquette elle-même. Ainsi, la mise à jour peut être réalisée dans un temps largement raisonnable (toutes les secondes par exemple). En revanche, en cas de changement de secteur de positionnement d'une localité ou quand une nouvelle localité se présente dans l'affichage, une étiquette est avantageusement affichée par clignotement durant quelques secondes afin d'attirer l'attention du pilote.

Préférentiellement, le dispositif d'aide au vol affiche dans la partie inférieure 60 de la zone d'affichage une étiquette représentant la localité de départ. Cette étiquette est également immobile dans cette partie de la zone d'affichage.

Préférentiellement, le dispositif d'aide au vol affiche dans la partie supérieure 50 de la zone d'affichage une étiquette représentant la localité de destination. Cette étiquette est également immobile dans cette partie de la zone d'affichage.

De plus, une photographie 21 de la localité de destination peut être présentée dans cette partie supérieure 50 de la zone d'affichage. La figure 3 représente cette photographie 21 plus en détail. Un élément 214 indique la route selon laquelle la photographie est vue. Préférentiellement, la base de données comporte une pluralité de photographie de la localité prises selon divers angles de vue de 0 à 360°. Ainsi, le dispositif d'aide au vol affiche la photographie selon le même angle de vue que la route d'approche de l'aéronef. On affiche également sur la photographie 213 l'altitude de survol réglementaire en dessous de laquelle il est interdit de voler. Il est possible également d'afficher l'altitude 212 de la localité.

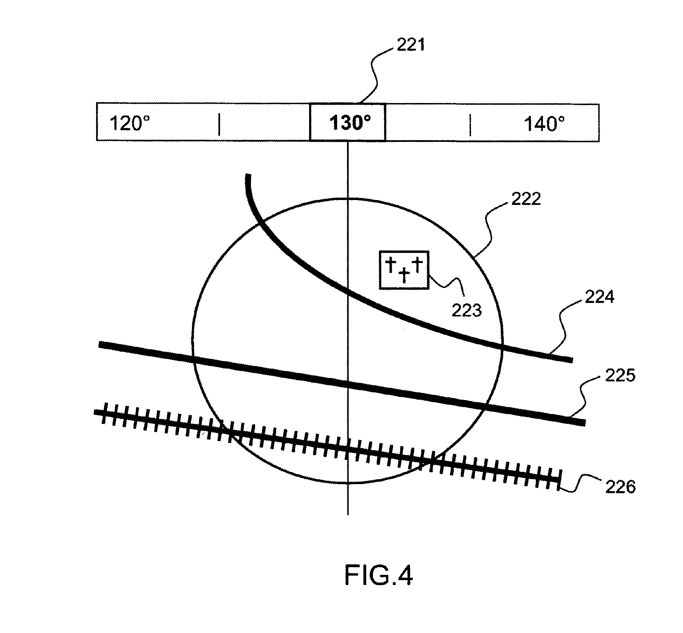

Une représentation synthétique 22 de la localité de destination peut également être présentée dans cette partie supérieure 50 de la zone d'affichage. La figure 4 illustre plus en détail un exemple d'une représentation synthétique décrivant les positions de repères topologiques 222 à 226. La base de données d'informations relatives aux localités contient des repères topologiques caractéristiques de la localité, tels que les voies de circulation, les rivières ou fleuves ou un cimetière. Ces repères sont choisis pour leur facilité d'identification en altitude lors de conditions de vol en visibilité réduite. Ces repères sont disposés les uns par rapport aux autres en fonction de la route d'approche 221 de l'aéronef. Ainsi, l'équipage dispose d'une représentation simple permettant de prendre les décisions de navigation rapidement. La mise à jour de la représentation synthétique 22 est telle que la disposition des repères topologiques évolue en fonction de la route suivie par l'aéronef, similairement à un compas classique pour faciliter la compréhension du pilote. La figure 4 représente une localité définie par le cercle 222 représentant sa superficie, la position d'un cimetière 223 dans la localité, un fleuve 224, une route 225 et une voie ferrée 226. Selon le mode d'affichage et le contenu de la base de données on peut afficher davantage d'éléments synthétiques de repères topologiques caractéristiques : églises, ponts, ... On peut également indiquer plus d'informations sur les repères (nom des routes - D513, nom des fleuves, ...). Si la surface d'affichage le permet, il est envisageable d'afficher également pour chaque étiquette de localité 11 à 15 une photo et une représentation synthétique pour les localités environnantes indiquées dans les étiquettes.

## Revendications

1. Dispositif d'aide au vol pour un aéronef comportant des moyens de lecture des données de navigation de l'aéronef et des moyens d'affichage aptes à représenter la position et le cap courant de l'aéronef par un référentiel immobile (1) dans la partie centrale (30) de la zone d'affichage, **caractérisé en ce qu'**il comporte également une base de données contenant des informations topologiques et photographiques représentatives des localités d'une zone géographique, le dispositif étant adapté à afficher en périphérie (40, 50, 60) de la partie centrale (30) de la zone d'affichage au moins une étiquette (14) contenant des informations représentatives d'une localité (101) et des informations de gestion du vol (102-106) pour atteindre la localité (101), au moins une représentation photographique (21) et une représentation topologique (22) de la localité de destination (101) et **en ce que** ladite étiquette (14) est positionnée dans la zone périphérique (40) relativement au référentiel immobile (1) de telle manière que la position de l'étiquette (14) par rapport au référentiel immobile (1) représente la position de la localité relativement à la position courante de l'aéronef.

2. Dispositif selon la revendication 1, dans lequel la zone périphérique (40) est divisée en au moins deux secteurs dans lesquels est positionnée une étiquette d'information (11-15), la dite étiquette étant immobile dans le secteur.

3. Dispositif selon l'une quelconque des revendications 1 et 2, dans lequel une étiquette (20) représentative de la localité de destination est affichée dans la partie supérieure (50) de la zone d'affichage.

4. Dispositif selon l'une quelconque des revendications 1 à 3, dans lequel une étiquette (10) représentative de la localité de départ est affichée dans la partie inférieure (60) de la zone d'affichage.

5. Dispositif selon l'une quelconque des revendications 1 à 4, dans lequel une représentation synthétique (4) de l'environnement extérieur de l'aéronef en vue relative par rapport à la position et le cap courant de l'aéronef est affichée dans la partie centrale (30) de la zone d'affichage superposé au référentiel immobile (1).

6. Dispositif selon l'une quelconque des revendications 1 à 4, dans lequel le référentiel immobile est un indicateur de cap (1).

7. Dispositif selon l'une quelconque des revendications précédentes, dans lequel une étiquette d'information comprend les informations suivantes :
- Le nom et l'indicateur de zone géographique de la localité (101);
- La route à suivre pour rejoindre la localité (102);
- La distance et la durée nécessaire pour rejoindre la localité selon la vitesse courante de l'aéronef (103);
- Un indicateur de carburant (104) indiquant si le carburant à bord est suffisant :
■ Pour aller jusqu'à la localité,
■ Pour aller jusqu'à la localité et revenir à la base de départ.
- Les informations météorologiques (105) :
■ Provenance et vitesse du vent,
- La distance de visibilité et la vitesse maximale autorisée par la réglementation (106).

8. Dispositif selon l'une quelconque des revendications 1 à 7, dans lequel la représentation photographique (21) d'une localité est positionnée à proximité de l'étiquette représentant la localité.

9. Dispositif selon la revendication 8, dans lequel la représentation photographique (21) est une représentation de la localité vue selon la route d'approche de l'aéronef.

10. Dispositif selon l'une quelconque des revendications 1 à 9, dans lequel la représentation topologique (22) d'une localité est positionnée à proximité de l'étiquette représentant la localité et comprend des repères topologiques (222-226) de la localité positionnés les uns par rapport aux autres en fonction de la route d'approche (221) de l'aéronef.

11. Dispositif selon la revendication 10, dans lequel la base de données comporte les repères topologiques suivants :
- Voie de circulation routière et ferrée (225,226) ;
- Voie fluviale (224) ;
- Cimetière (223) ;
- Superficie de la localité (222).

## Patentansprüche

1. Flughilfevorrichtung für ein Luftfahrzeug, die Mittel zum Lesen von Navigationsdaten des Luftfahrzeugs und Anzeigemittel umfasst, die so ausgelegt sind, dass sie Position und aktuellen Kurs des Luftfahrzeugs anhand einer stationären Referenz (1) im mittleren Teil (30) der Anzeigezone zeigen, **dadurch gekennzeichnet, dass** sie auch eine Datenbank umfasst, die topologische und fotografische Informationen enthält, die Orte in einer geografischen Zone repräsentieren, wobei die Vorrichtung so ausgelegt ist, dass sie auf der Peripherie (40, 50, 60) des mittleren Teils (30) der Anzeigezone wenigstens ein Etikett (14) anzeigt, das Informationen enthält, die einen Ort (101) repräsentieren, und Flugmanagementinformationen (102-106) zum Erreichen dieses Ortes (101), wenigstens eine fotografische Darstellung (21) und eine topologische Darstellung (22) des Zielortes (101), und dadurch, dass das Etikett (14) in der peripheren Zone (40) relativ zu der stationären Referenz (1) so positioniert ist, dass die Position des Etiketts (14) mit Bezug auf die stationäre Referenz (1) die Position des Ortes relativ zur aktuellen Position des Luftfahrzeugs repräsentiert.

2. Vorrichtung nach Anspruch 1, in der die periphere Zone (40) in wenigstens zwei Sektoren unterteilt ist, in denen sich ein Informationsetikett (11-15) befindet, wobei das Etikett in dem Sektor stationär ist.

3. Vorrichtung nach einem der Ansprüche 1 und 2, in der ein den Zielort repräsentierendes Etikett (20) im oberen Teil (50) der Anzeigezone angezeigt wird.

4. Vorrichtung nach einem der Ansprüche 1 bis 3, in der ein den Abflugort repräsentierendes Etikett (10) im unteren Teil (60) der Anzeigezone angezeigt wird.

5. Vorrichtung nach einem der Ansprüche 1 bis 4, in der eine künstliche Darstellung (4) der äußeren Umgebung des Luftfahrzeugs in einer relativen Ansicht mit Bezug auf die Position und den aktuellen Kurs des Luftfahrzeugs im mittleren Teil (30) der Anzeigezone auf der stationären Referenz (1) überlagert angezeigt wird.

6. Vorrichtung nach einem der Ansprüche 1 bis 4, in der die stationäre Referenz ein Kursindikator (1) ist.

7. Vorrichtung nach einem der vorherigen Ansprüche, in der ein Informationsetikett die folgenden Informationen enthält:
- Namen und geografischen Zonenindikator des Orts (101);
- die zum Erreichen des Ortes (102) einzuhaltende Route;
- Entfernung und benötigte Zeitdauer zum Erreichen des Ortes bei der aktuellen Geschwindigkeit des Luftfahrzeugs (103);
- einen Treibstoffanzeiger (104), der anzeigt, ob der Treibstoff an Bord ausreicht:
■ um den Ort zu erreichen;
■ um den Ort zu erreichen und zum Abflugpunkt zurückzukehren;
- die meteorologischen Informationen (105);
■ Windrichtung und -geschwindigkeit;
- Sichtweite und vorschriftsmäßige (106) Höchstgeschwindigkeit.

8. Vorrichtung nach einem der Ansprüche 1 bis 7, wobei sich die fotografische Darstellung (21) eines Orts in der Nähe des den Ort repräsentierenden Etiketts befindet.

9. Vorrichtung nach Anspruch 8, wobei die fotografische Darstellung (21) eine Darstellung des Orts gemäß der Anflugroute des Luftfahrzeugs betrachtet ist.

10. Vorrichtung nach einem der Ansprüche 1 bis 9, wobei sich die topologische Darstellung (22) eines Orts in der Nähe des Etiketts befindet, das den Ort repräsentiert und topologische Referenzen (222-226) des Orts umfasst, die relativ zueinander in Abhängigkeit von der Anflugroute (221) des Luftfahrzeugs positioniert sind.

11. Vorrichtung nach Anspruch 10, wobei die Datenbank die folgenden topologischen Referenzen umfasst:
- Straßen und Eisenbahnen (225, 226);
- Wasserwege (224);
- Friedhöfe (223);
- den Oberflächenbereich des Orts (222).

## Claims

1. A flight assistance device for an aircraft comprising means for reading navigation data of said aircraft and display means designed to show the position and the current heading of said aircraft using a fixed reference (1) in the central part (30) of the display area, **characterised in that** it further comprises a database containing topological and photographic information representing the localities of a geographical area, said device being designed to display, on the periphery (40, 50, 60) of said central part (30) of said display area, at least one label (14) containing information representing a locality (101) and flight management information (102-106) for reaching said locality (101), at least one photographic representation (21) and one topological representation (22) of said destination locality (101), and **in that** said label (14) is positioned in the peripheral area (40) relative to said fixed reference (1) so that the position of said label (14) relative to said fixed reference (1) represents the position of said locality relative to the current position of the aircraft.

2. The device according to claim 1, wherein said peripheral area (40) is divided into at least two sectors in which an information label (11-15) is positioned, said label being fixed in the sector.

3. The device according to any one of claims 1 to 2, wherein a label (20) representing said destination locality is displayed in the upper part (50) of said display area.

4. The device according to any one of claims 1 to 3, wherein a label (10) representing the departure locality is displayed in the lower part (60) of said display area.

5. The device according to any one of claims 1 to 4, wherein a synthetic representation (4) of the external environment of said aircraft, in a relative view with respect to the position and the current heading of said aircraft, is displayed in said central part (30) of said display area superposed on said fixed reference (1).

6. The device according to any one of claims 1 to 4, wherein said fixed reference is a heading indicator (1).

7. The device according to any one of the preceding claims, wherein an information label comprises the following information:
- the name and the geographical area indicator of said locality (101);
- the route to be followed in order to reach said locality (102);
- the distance and the duration required in order to reach said locality at the current speed of the aircraft (103);
- a fuel indicator (104) indicating whether the fuel on board is sufficient:
■ to reach said locality;
■ to reach said locality and to return to the departure base;
- the meteorological information (105):
■ wind direction and speed;
- the visibility distance and the maximum speed authorised by regulations (106).

8. The device according to any one of claims 1 to 7, wherein said photographic representation (21) of a locality is positioned in the vicinity of said label representing said locality.

9. The device according to claim 8, wherein said photographic representation (21) is a representation of said locality viewed according to the approach route of said aircraft.

10. The device according to any one of claims 1 to 9, wherein said topological representation (22) of a locality is positioned in the vicinity of said label representing said locality and comprises topological references (222-226) of said locality positioned relative to each other as a function of the approach route (221) of said aircraft.

11. The device according to claim 10, wherein said database comprises the following topological references:
- roadways and railways (225, 226);
- waterways (224);
- cemeteries (223);
- surface area of said locality (222).
